# EUROPEAN PATENT APPLICATION

(11) **EP 4 668 212 A1**
(43) Date of publication of application: **24.12.2025**
(21) Application number: 23928665.1
(22) Date of filing: 23.03.2023
(51) Int. Cl.: G06T 7/70

(54) **INFORMATION PROCESSING DEVICE, INFORMATION PROCESSING METHOD, AND PROGRAM**

(71) Applicant: HONDA MOTOR CO., LTD., Tokyo 105-8404 (JP)
(72) Inventor: HASEGAWA, Takahiko, Wako-shi, Saitama 351-0193 (JP); KOMURO, Misa, Wako-shi, Saitama 351-0193 (JP)
(74) Representative: Kiwit, Benedikt
(86) International application number: PCT/JP2023/011408
(87) International publication number: WO 2024/195086

(57) **Abstract**

An information processing device includes an image acquisition unit configured to acquire an image obtained by imaging a surrounding situation of a mobile object, a feature point extraction unit configured to extract one or more feature points from the image using a predetermined method, a feature point elimination unit configured to give a noise rank representing a level of likelihood of noise to each of the one or more feature points and eliminate at least a part of the one or more feature points on the basis of the given noise rank, and a self-position estimation unit configured to estimate a position of the mobile object in the surrounding situation on the basis of the one or more feature points remaining after elimination.

## Description

### TECHNICAL FIELD

The present invention relates to an information processing device, an information processing method, and a program.

### BACKGROUND ART

In the related art, a technique for estimating a self-position of a mobile object that autonomously travels is known. For example, Patent Document 1 describes a technique for detecting an object surrounding a mobile object by irradiating the surroundings of the mobile object with laser and receiving reflected light of the laser, generating an environment map of the mobile object, and when a moving object is detected, deleting the moving object from the environment map.

### Citation List

### Patent Document

Patent Document 1: Japanese Unexamined Patent Application, First Publication No. 2022-119451

### SUMMARY OF INVENTION

### Technical Problem

The technique described in Patent Document 1 generates the environment map by removing only the moving object and estimates a self-position. In this way, in the related art, it is not possible to determine noise in more detail after the environment map is generated, and the robustness of self-position estimation may be low.

The present invention has been accomplished in view of such a situation, and an object of the present invention is to provide an information processing device, an information processing method, and a program capable of improving robustness of self-position estimation.

### Solution to Problem

A an information processing device, an information processing method, and a program according to the invention employs the following configurations.
(1) An information processing device according to an aspect of the invention includes an image acquisition unit configured to acquire an image obtained by imaging a surrounding situation of a mobile object, a feature point extraction unit configured to extract one or more feature points from the image using a predetermined method, a feature point elimination unit configured to give a noise rank representing a level of likelihood of noise to each of the one or more feature points and eliminate at least a part of the one or more feature points on the basis of the given noise rank, and a self-position estimation unit configured to estimate a position of the mobile object in the surrounding situation on the basis of the one or more feature points remaining after elimination.
(2) In the aspect of (1) described above, the feature point elimination unit is configured to segment the image into a plurality of areas and give the noise rank on the basis of a density of the one or more feature points in each of the plurality of segmented areas.
(3) In the aspect of (2) described above, the feature point elimination unit is configured to give a higher noise rank as the density of the one or more feature points becomes higher.
(4) In the aspect of (1) described above, the feature point elimination unit is configured to recognize an object reflected in the image and give a noise rank according to a type of the object to the one or more feature points included in the recognized object.
(5) In the aspect of (4) described above, the feature point elimination unit is configured to give a higher noise rank when the type of the object is a dynamic object than when the type of the object is a static object.
(6) In the aspect of (4) described above, the feature point elimination unit is configured to give a higher noise rank when the type of the object is a non-artificial object than when the type of the object is an artificial object.
(7) An information processing method according to an aspect of the invention includes, by a computer, acquiring an image obtained by imaging a surrounding situation of a mobile object, extracting one or more feature points from the image using a predetermined method, giving a noise rank representing a level of likelihood of noise to each of the one or more feature points and eliminating at least a part of the one or more feature points on the basis of the given noise rank, and estimating a position of the mobile object in the surrounding situation on the basis of the one or more feature points remaining after elimination.
(8) A program according to an aspect of the invention causes a computer to acquire an image obtained by imaging a surrounding situation of a mobile object, extract one or more feature points from the image using a predetermined method, give a noise rank representing a level of likelihood of noise to each of the one or more feature points and eliminate at least a part of the one or more feature points on the basis of the given noise rank, and estimate a position of the mobile object in the surrounding situation on the basis of the one or more feature points remaining after elimination.

### Advantageous Effects of Invention

According to the aspects of (1) to (8) described above, it is possible to improve the robustness of self-position estimation.

### BRIEF DESCRIPTION OF DRAWINGS

FIG. 1 is a diagram illustrating an example of a configuration of a mobile object 1 and a control device 100 according to an embodiment.
FIG. 2 is a perspective view of the mobile object 1 viewed from above.
FIG. 3 is a diagram illustrating an example of an image IM acquired by an image acquisition unit 110.
FIG. 4 is a diagram illustrating an example of a noise rank determination table 72.
FIG. 5 is a diagram illustrating another example of a noise rank determination table 72.
FIG. 6 is a diagram illustrating an example of feature point elimination processing that is executed by a feature point elimination unit 130.
FIG. 7 is a diagram illustrating another example of image segmentation processing that is executed by the feature point elimination unit 130.
FIG. 8 is a diagram illustrating an example of map generation and self-position estimation processing that is executed by a self-position estimation unit 140.
FIG. 9 is a flowchart illustrating an example of a flow of processing that is executed by the control device 100.

### DESCRIPTION OF EMBODIMENTS

Hereinafter, an embodiment of an information processing device, an information processing method, and a program of the present invention will be described with reference to the drawings. The information processing device of the present invention is mounted in, for example, a mobile object. The mobile object may move on both a roadway and a predetermined area different from a roadway. The mobile object may be referred to as a micro-mobility. An electrified kickboard is a type of micro-mobility. The predetermined area is, for example, a sidewalk. Furthermore, the predetermined area may be some or all of road-side strips, bicycle lanes, public open spaces, and the like or may include all of sidewalks, road-side strips, bicycle lanes, public open spaces, and the like. The mobile object may be a mobile object that a person can board or may be an autonomous mobile body that can perform autonomous traveling in an unmanned manner. The latter autonomous mobile object is used for leading or guiding a person, following a person, or conveying a package, for example.

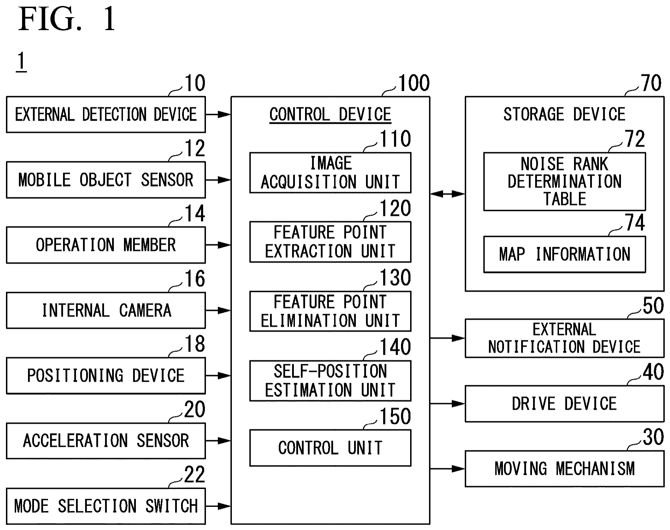

FIG. 1 is a diagram illustrating an example of a configuration of a mobile object 1 and a control device 100 according to the embodiment. In the mobile object 1, for example, an external detection device 10, a mobile object sensor 12, an operation member 14, an internal camera 16, a positioning device 18, an acceleration sensor 20, a mode selection switch 22, a dial switch 24, a moving mechanism 30, a drive device 40, an external notification device 50, a storage device 70, and the control device 100 are mounted. Some components not indispensable for implementing the features of the present invention among those components may be omitted.

The external detection device 10 is various devices that have a moving direction of the mobile object 1 as a detection range. The external detection device 10 includes an external camera, a radar device, a light detection and ranging (LIDAR), a sensor fusion device, and the like. The external detection device 10 outputs information (image, object position, and the like) indicating a detection result to the control device 100.

The mobile object sensor 12 includes, for example, a speed sensor, a yaw rate (angular velocity) sensor, an azimuth sensor, and an operation amount detection sensor attached to the operation member 14. The operation member 14 includes, for example, an operation member (for example, an accelerator pedal or a brake pedal) for giving an instruction on acceleration/deceleration and an operation member (for example, a steering wheel) for giving an instruction on steering. In this case, the mobile object sensor 12 may include an accelerator position sensor, a brake depression amount sensor, a steering torque sensor, and the like. The mobile object 1 may include, as the operation member 14, an operation member (for example, a non-circular rotary operation member, a joystick, or a button) of an aspect other than those described above.

The internal camera 16 captures an image of at least a head of an occupant of the mobile object 1 from the front. The internal camera 16 is a digital camera using an imaging element such as a charge coupled device (CCD) or a complementary metal oxide semiconductor (CMOS). The internal camera 16 outputs the captured image to the control device 100.

The positioning device 18 is a device that measures a position of the mobile object 1. The positioning device 18 is, for example, a global navigation satellite system (GNSS) receiver, and specifies the position of the mobile object 1 on the basis of signals received from GNSS satellites and outputs the position of the mobile object 1 as position information. The position information of the mobile object 1 may be estimated from a position of a Wi-Fi base station to which a communication device described below is connected.

The acceleration sensor 20 detects an acceleration of the mobile object 1 and output a signal according to the detected acceleration to the control device 100. The acceleration sensor 20 detects the acceleration acting in a vertical direction (height direction) in addition to a horizontal direction of the mobile object 1.

The mode selection switch 22 is a switch that is operated by the occupant. The mode selection switch 22 may be a mechanical switch or may be a graphical user interface (GUI) switch that is set on a touch panel. The mode selection switch 22 receives an operation to switch a driving mode to one of, for example, a mode A: an assist mode where one of a steering operation and acceleration/deceleration control is performed by an occupant, and the other is automatically performed; there may be a mode A-1 where the steering operation is performed by the occupant and the acceleration/deceleration control is automatically performed, and a mode A-2 where an acceleration/deceleration operation is performed by the occupant and steering control is automatically performed, a mode B: a manual driving mode where the steering operation and the acceleration/deceleration operation are performed by the occupant, and a mode C: an automatic driving mode where the steering control and the acceleration/deceleration control are automatically performed.

The moving mechanism 30 is a mechanism for moving the mobile object 1 on a road. The moving mechanism 30 is, for example, a wheel group including steered wheels and drive wheels. The moving mechanism 30 may be legs for multi-legged walking.

The drive device 40 outputs a force to the moving mechanism 30 to move the mobile object 1. For example, the drive device 40 includes a motor that drives the drive wheels, a battery that stores electric power to be supplied to the motor, and a steering device that adjusts a steering angle of the steered wheels. The drive device 40 may include an internal combustion engine, a fuel cell, or the like as drive force output means or power generation means. The drive device 40 may further include a brake device that operates using a frictional force or air resistance.

The external notification device 50 is a lamp, a display device, a speaker, or the like that is provided on, for example, an external plate portion of the mobile object 1 and notices information toward the outside of the mobile object 1. The external notification device 50 performs different operations between a state in which the mobile object 1 is moving on a sidewalk and a state in which the mobile object 1 is moving on a roadway. For example, the external notification device 50 is controlled such that the lamp emits light when the mobile object 1 is moving on a sidewalk, and the lamp does not emit light when the mobile object 1 is moving on a roadway. A color of light emitted from the lamp is suitably a color specified by law. The external notification device 50 may be controlled such that the lamp emits green light when the mobile object 1 is moving on a sidewalk and the lamp emits blue light when the mobile object 1 is moving on a roadway. When the external notification device 50 is a display device, the external notification device 50 displays "traveling on sidewalk" by text or graphics when the mobile object 1 is traveling on a sidewalk.

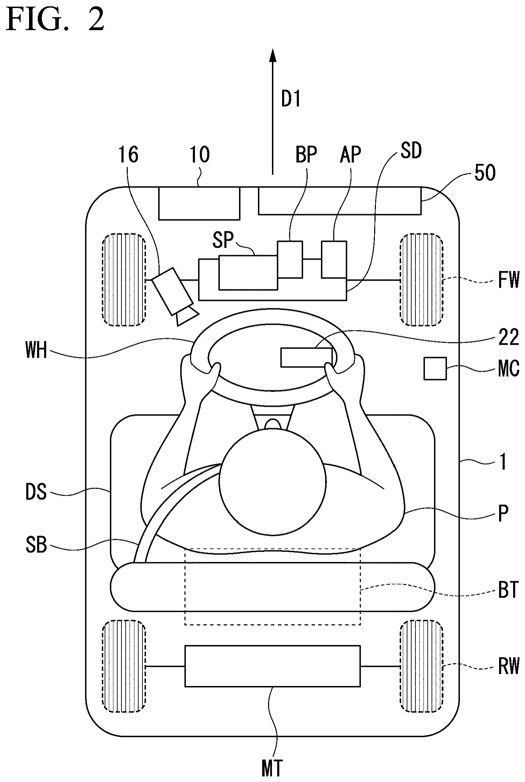

FIG. 2 is a perspective view of the mobile object 1 viewed from above. In the drawing, FW represents steered wheels, RW represents drive wheels, SD represents a steering device, MT represents a motor, and BT represents a battery. The steering device SD, the motor MT, and the battery BT are provided in the drive device 40. Furthermore, AP represents an accelerator pedal, BP represents a brake pedal, WH represents a steering wheel, SP represents a speaker, and MC represents a microphone. The mobile object 1 illustrated in the drawing is a one-passenger mobile object, and an occupant P is sitting on a driver's seat DS with a seatbelt SB fastened. An arrow D1 represents a moving direction (speed vector) of the mobile object 1. The external detection device 10 is provided near a front end portion of the mobile object 1, the internal camera 16 is provided at a position where an image of a head of the occupant P can be captured from the front of the occupant P, and the mode selection switch 22 is provided in a boss portion of the steering wheel WH. The external notification device 50 serving as a display device is provided near the front end portion of the mobile object 1.

Returning to FIG. 1, the storage device 70 is, for example, a non-transitory storage device such as a hard disk drive (HDD), a flash memory, or a random access memory (RAM). In the storage device 70, a noise rank determination table 72, map information 74, a program that is executed by the control device 100, and the like are stored. While the storage device 70 is illustrated outside the frame of the control device 100 in the drawing, the storage device 70 may be provided in the control device 100.

### Control Device

The control device 100 includes, for example, an image acquisition unit 110, a feature point extraction unit 120, a feature point elimination unit 130, a self-position estimation unit 140, and a control unit 150. For example, these components are implemented by a hardware processor such as a central processing unit (CPU) executing a program (software). Some or all of these components may be implemented by hardware (circuit unit; including circuitry) such as a large scale integration (LSI), an application specific integrated circuit (ASIC), a field-programmable gate array (FPGA), or a graphics processing unit (GPU) or may be implemented through cooperation of software and hardware. The program may be stored in the storage device 70 in advance or may be stored in a removable storage medium (not-transitory storage medium) such as a DVD or a CD-ROM and may be installed to the storage device 70 when the storage medium is loaded into a drive device. A combination of the image acquisition unit 110, the feature point extraction unit 120, the feature point elimination unit 130, and the self-position estimation unit 140 is an example of an "information processing device" in the claims.

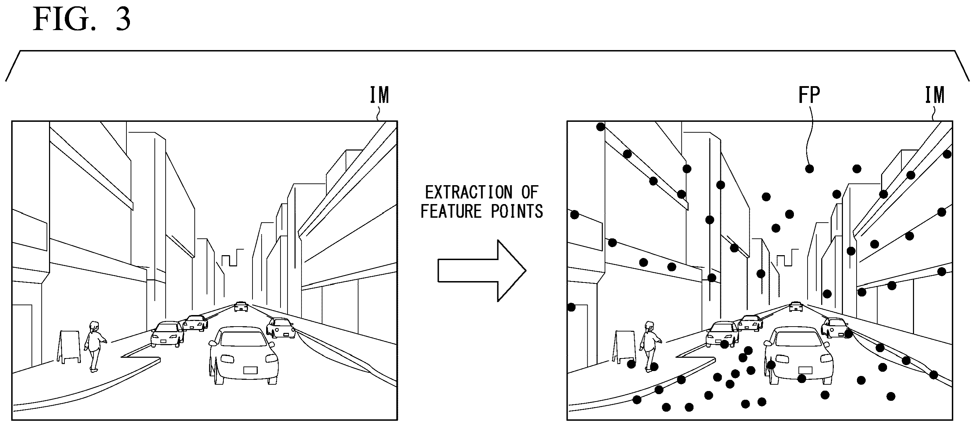

The image acquisition unit 110 acquires the image IM obtained by imaging a surrounding situation of the mobile object 1 with the external detection device 10, which is an external camera. In particular, the image acquisition unit 110 acquires the image IM obtained by imaging the front of the mobile object 1 in the moving direction with the external detection device 10, which is an external camera. FIG. 3 is a diagram illustrating an example of the image IM acquired by the image acquisition unit 110. While FIG. 3 illustrates an image when the mobile object 1 is traveling on a roadway as an example, as described above, the image IM may be an image when the mobile object 1 is traveling on a sidewalk.

The feature point extraction unit 120 extracts one or more feature points from the image IM using a predetermined method. Here, the predetermined method is, for example, an extraction method using a trained model that is trained to output edges of an object (for example, a building or a road structure) reflected in the image M as a point cloud when the image IM is input. In addition, the predetermined method is any feature point extraction method that is used in visual simultaneous localization mapping (SLAM), which is a technique for ascertaining a self-position from image data captured by a camera in a three-dimensional manner. In an image in a right portion of FIG. 3, reference sign FP represents a feature point extracted by the feature point extraction unit 120.

Here, in the Visual SLAM in the related art, determination is made whether each extracted feature point is noise, and all feature points determined as noise are not used in calculation of self-position estimation. However, in general, it is difficult to perform determination regarding whether the extracted feature point is noise, and in the related art, a feature point that can be used in calculation of self-position estimation may be determined as noise.

Under the background of the above-described situation, the feature point elimination unit 130 gives a noise rank representing a level of likelihood of noise to each of extracted feature points and determines whether to eliminate each feature point as noise on the basis of the given noise rank. To implement this function, for example, the storage device 70 stores the noise rank determination table 72 to be a criterion for determining the noise rank of each feature point in advance, and the feature point elimination unit 130 gives the noise point to each feature point with reference to the noise rank determination table 72.

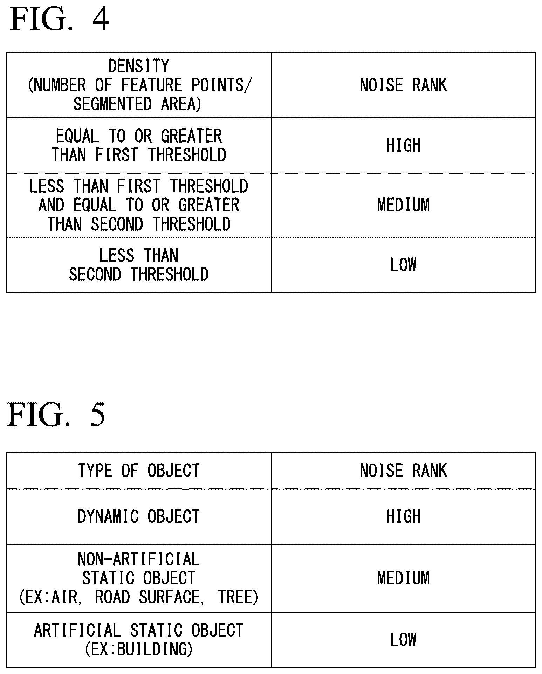

FIG. 4 is a diagram illustrating an example of the noise rank determination table 72. FIG. 4 represents a method in which the feature point elimination unit 130 segments the image IM into a plurality of areas (for example, 16 × 16) and gives a noise rank to a feature point included in each segmented area according to the number of feature points in the segmented area, as an example. As illustrated in FIG. 4, for example, when the number of feature points included in one segmented area is equal to or greater than a first threshold, the feature point elimination unit 130 may give "HIGH" indicating that the noise rank is high (that is, the likelihood of noise is high), to all feature points included in the segmented area. For example, when the number of feature points included in one segmented area is less than the first threshold and equal to or greater than a second threshold, the feature point elimination unit 130 may give "MEDIUM" indicating that the noise rank is a medium degree (that is, the likelihood of noise is a medium degree), to all feature points included in the segmented area. For example, when the number of feature points included in one segmented area is less than the second threshold, the feature point elimination unit 130 may give "LOW" indicating that the noise rank is low (that is, the likelihood of noise is low), to all feature points included in the segmented area.

FIG. 5 is a diagram illustrating another example of a noise rank determination table 72. FIG. 5 represents a method in which the feature point elimination unit 130 recognizes a type of an object reflected in the image IM by predetermined image recognition processing (for example, image recognition processing using a convolutional neural network (CNN) and gives a noise rank to a feature point included in the object according to the recognized type of the object. As illustrated in FIG. 5, for example, when the type of the object recognized from the image IM is a dynamic object, the feature point elimination unit 130 may give the noise rank "HIGH" to all feature points included in the object. The "dynamic object" in this case may be an object detected as being moving as a result of capturing images in time series with the external detection device 10, which is an external camera, and may include an object (for example, an automobile) that is likely to move potentially while being not moving. For example, when the type of the object recognized from the image IM is a non-artificial static object (for example, air, road surface, or tree), the feature point elimination unit 130 may give the noise rank "MEDIUM" to all feature points included in the object. For example, when the type of the object recognized from the image IM is an artificial static object (for example, building), the feature point elimination unit 130 may give the noise rank "LOW" to all feature points included in the object.

The method for giving the noise rank described above is merely an example, and the noise rank may be two values or may be four values or more. A relationship between the type of the object and the noise rank is different from that illustrated in the drawing, and for example, a noise rank of some objects (for example, air) not contributing to map generation described below among the non-artificial static objects may be set to "HIGH". The giving of the noise rank is not limited to only one of the giving method of FIG. 4 and the giving method of FIG. 5, and the noise rank may be given using both the giving method of FIG. 4 and the giving method of FIG. 5 (that is, two types of noise ranks may be given to each feature point).

When the noise rank is given to each feature point extracted by the feature point extraction unit 120, the feature point elimination unit 130 determines whether to eliminate each feature point as noise on the basis of the given noise rank. For example, the feature point elimination unit 130 may eliminate all feature points of which the noise rank is set to "HIGH" or may eliminate all feature points of which the noise rank is set to "HIGH" or "MEDIUM". For example, the feature point elimination unit 130 may eliminate all feature points of which the noise rank is set to "HIGH" by one of the giving method of FIG. 4 and the giving method of FIG. 5 or of which the noise rank is set to "MEDIUM" by both the giving method of FIG. 4 and the giving method of FIG. 5. In this way, determination may be performed whether to eliminate each feature point as noise according to a combination of two types of noise ranks given by the giving method of FIG. 4 and the giving method of FIG. 5.

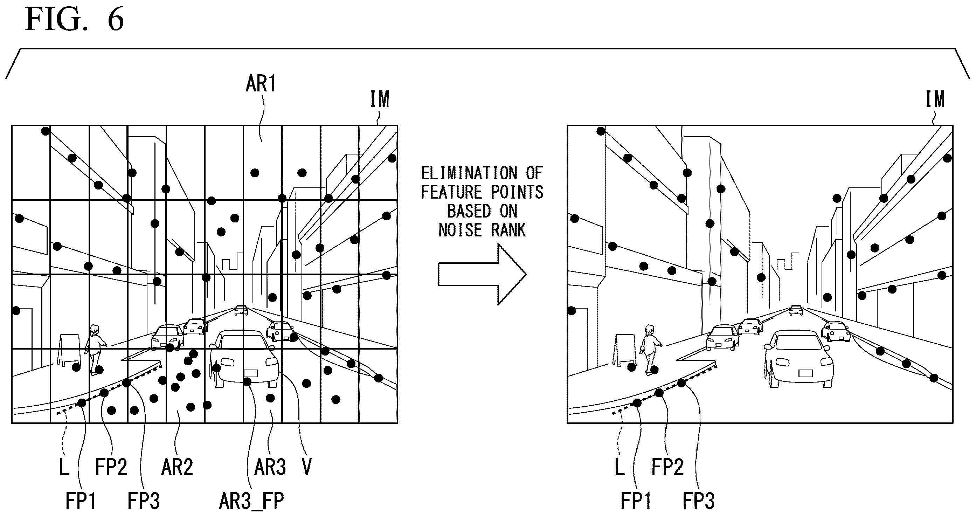

FIG. 6 is a diagram illustrating an example of feature point elimination processing that is executed by the feature point elimination unit 130. As illustrated in FIG. 6, the feature point elimination unit 130 may recognize an entire area AR1, which is one segmented area of the image IM, as an air object, may give the noise rank "MEDIUM" to all feature points included in the area AR1, and may eliminate the feature point from the image IM, for example.

For example, for an area AR2, the feature point elimination unit 130 may determine that a density of feature points included in the area AR2 is equal to or greater than a first threshold, may give the noise rank "HIGH" to all feature points, and may eliminate the feature points from the image IM. For example, for an area AR3, the feature point elimination unit 130 may recognize an automobile V as a dynamic object from the area AR3, may give the noise rank "HIGH" to a feature point AR3_FP included in the automobile V, and may eliminate the feature point from the image IM.

Here, for an area AR4, when the density of feature points included in the area AR4 is equal to or greater than the first threshold, normally, the feature point elimination unit 130 gives the noise rank "HIGH" to the feature points included in the area AR4 and eliminates the feature points from the image IM. However, even when the noise rank "HIGH" is given to a certain feature point (or a set of feature points), when a predetermined shape (for example, a straight line representing an edge of a building or a road) fits the feature point, the feature point elimination unit 130 may not eliminate and may leave the feature point. For example in the case of FIG. 6, the feature point elimination unit 130 may fit a straight line L to feature points FP1, FP2, and FP3, and when an error of each of the feature points FP1, FP2, and FP3 and the straight line L is equal to or less than a threshold, may not eliminate and may leave the feature points FP1, FP2, and FP3. As a result of eliminating the feature points from the image IM with the feature point elimination unit 130 by the method described above, feature points unnecessary for map generation are removed from the image IM illustrated in a left portion of FIG. 6, and an image IM illustrated in a right portion of FIG. 6 is obtained.

In FIG. 6 described above, a case where the feature point elimination unit 130 segments the image IM equally, recognizes an object included in the segmented area, and determines a noise rank of feature points included in the recognized object according to the type of the object has been described. It should be noted that the present invention is not limited to such a configuration, and the feature point elimination unit 130 may recognize an object before the segmentation of the image IM and may segment the image IM with an individual recognized object as one segment.

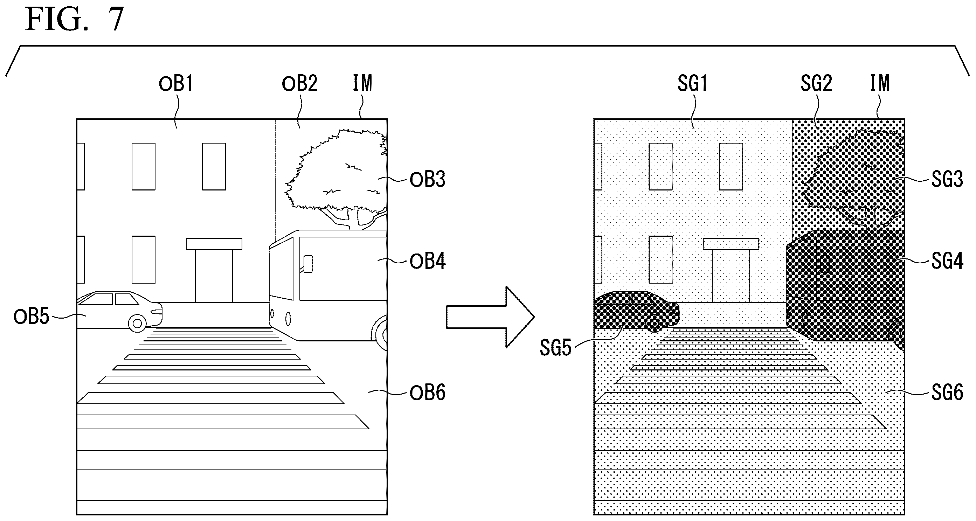

FIG. 7 is a diagram illustrating another example of image segmentation processing that is executed by the feature point elimination unit 130. The feature point elimination unit 130 recognizes a building OB1, air OB2, a tree OB3, a bus OB4, an automobile OB5, and a road OB6 as an object from an image IM illustrated in a left portion of FIG. 7, for example. Next, the feature point elimination unit 130 segments the image IM with the individual recognized objects OB1 to OB6 as segments SG1 to SG6. Next, the feature point elimination unit 130 gives noise ranks according to types of the objects OB1 to OB6 to feature points included in the respective segments SG1 to SG6 and eliminates feature points according to the given noise ranks. Even in this manner, it is possible to narrow down feature points unnecessary for map generation from the image IM.

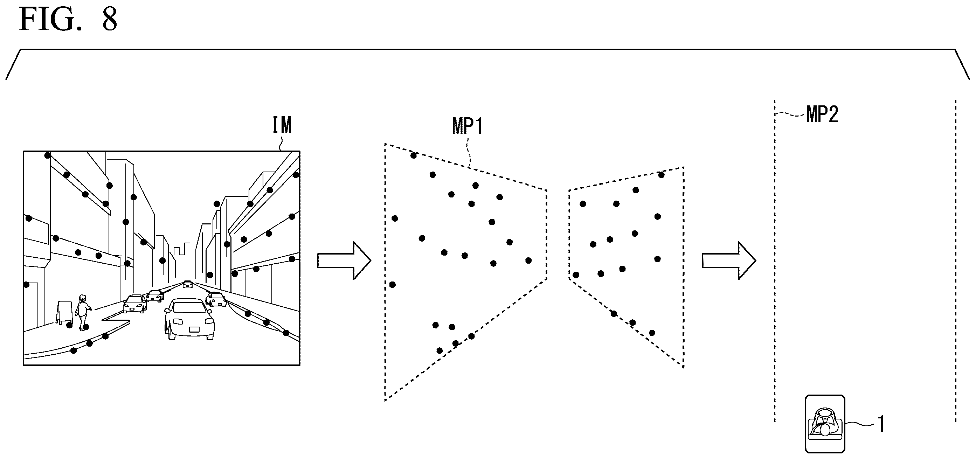

The self-position estimation unit 140 generates a map representing the surrounding situation of the mobile object 1 on the basis of the feature points remaining after the feature point elimination unit 130 eliminates the feature points from the image IM and estimates a self-position of the mobile object 1 in the map. FIG. 8 is a diagram illustrating an example of map generation and self-position estimation processing that is executed by the self-position estimation unit 140. The self-position estimation unit 140 may acquire, as a map, for example, a set of all feature points remaining after the feature points are eliminated from an image IM and may estimate a self-position of the mobile object 1 as a relative distance from the feature points in the acquired map.

For example, the self-position estimation unit 140 may fit a predetermined shape (plane or curved surface) to three-dimensional feature points remaining after the feature points are eliminated from the image IM, may acquire, as a map, a predetermined shape when an error between each feature point and a predetermined shape becomes minimum and may estimate a self-position of the mobile object 1 as a relative distance from the predetermined shape in the acquired map. For example, as illustrated in a central portion of FIG. 8, the self-position estimation unit 140 may acquire planes fitted to the feature points as a three-dimensional map MP1 and may estimate a self-position of the mobile object 1 as a relative distance from the planes in the three-dimensional map MP1.

For example, the self-position estimation unit 140 may acquire a two-dimensional map MP2 by performing coordinate conversion of the predetermined shape fitted to the feature points into a two-dimensional bird's eye view coordinate system and may estimate a self-position of the mobile object 1 as a relative distance from a predetermined shape in the acquired two-dimensional map MP2. For example, as illustrated in a right portion of FIG. 8, the self-position estimation unit 140 may acquire the two-dimensional map MP2 by performing coordinate conversion of the plane in the three-dimensional map MP1 into a bird's eye view coordinate system and may estimate the self-position of the mobile object 1 as a relative distance from straight lines in the two-dimensional map MP2. The self-position estimation unit 140 stores the map acquired by the above-described method as the map information 74 in the storage device 70.

The control unit 150 controls the drive device 40 or executes driving assistance to the occupant according to the set driving mode with reference to the map information 74. For example, when the driving mode is set to the automatic driving mode, the control unit 150 detects a free space from the map information 74 and controls the drive device 40 such that the mobile object 1 travels in the free space with the estimate self-position as a starting point. For example, in the case of the three-dimensional map MP1 of FIG. 8, the control unit 150 may detect a space sandwiched between right and left planes as a free space. For example, in the case of the two-dimensional map MP2 of FIG. 8, the control unit 150 may detect a space sandwiched by right and left straight lines as a free space. When the driving mode is set to the manual driving mode, the control unit 150 may display the map information 74 on the external notification device 50, which is a display device, and the occupant may perform driving with reference to the map information 74 displayed on the display device.

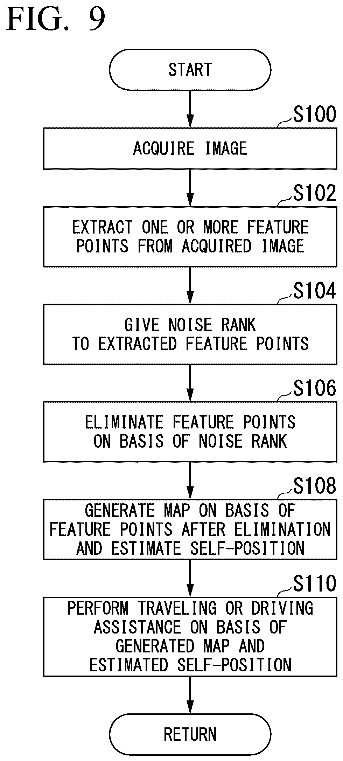

Next, a flow of processing that is executed by the control device 100 will be described with reference to FIG. 9. FIG. 9 is a flowchart illustrating an example of a flow of processing that is executed by the control device 100.

First, the image acquisition unit 110 acquires the image IM obtained by imaging the surrounding situation of the mobile object 1 with the external detection device 10, which is an external camera (Step S100). Next, the feature point extraction unit 120 extracts one or more feature points from the acquired image IM using the predetermined method (Step S102). Next, the feature point elimination unit 130 gives the noise rank to each of the one or more extracted feature points (Step S104). Next, the feature point elimination unit 130 eliminates at least a part of the one or more extracted feature points on the basis of the given noise rank (Step S106). Next, the self-position estimation unit 140 generates a map representing the surrounding situation of the mobile object 1 on the basis of one or more feature points remaining after elimination and estimates the self-position of the mobile object 1 in the map (Step S108). Next, the control unit 150 causes the mobile object 1 to travel or executes driving assistance to the mobile object 1 on the basis of the generated map and the estimated self-position (Step S110). With this, the processing of this flowchart ends.

According to the present embodiment described as above, the image obtained by imaging the surrounding situation of the mobile object is acquired, one or more feature points are extracted from the image using the predetermined method, the noise rank representing the level of likelihood of noise is given to each of one or more feature points, at least a part of one or more feature points is eliminated on the basis of the given noise rank, and the position of the mobile object in the surrounding situation is estimated on the basis of one or more feature points remaining after elimination. With this, it is possible to improve the robustness of self-position estimation.

The above-described embodiment can be expressed as follows.
a storage medium that stores a program, and
a hardware processor,
in which the hardware processor executes the program to
acquire an image obtained by imaging a surrounding situation of a mobile object,
extract one or more feature points from the image by a predetermined method,
give a noise rank representing a level of likelihood of noise to each of the one or more feature points and eliminate at least a part of the one or more feature points on the basis of the given noise rank, and
estimate a position of the mobile object in the surrounding situation on the basis of the one or more feature points remaining after elimination.

Although the mode for carrying out the present invention has been described using the embodiment, the present invention is not limited to the embodiment, and various modifications and substitutions can be made without departing from the spirit or scope of the present invention.

### REFERENCE SIGNS LIST

10 External detection device
12 Mobile object sensor
14 Operation member
16 Internal camera
18 Positioning device
20 Acceleration sensor
22 Mode selection switch
30 Moving mechanism
40 Drive device
50 External notification device
70 Storage device
100 Control device
110 Image acquisition unit
120 Feature point extraction unit
130 Feature point elimination unit
140 Self-position estimation unit
150 Control unit

## Claims

1. An information processing device comprising:
an image acquisition unit configured to acquire an image obtained by imaging a surrounding situation of a mobile object;
a feature point extraction unit configured to extract one or more feature points from the image using a predetermined method;
a feature point elimination unit configured to give a noise rank representing a level of likelihood of noise to each of the one or more feature points and eliminate at least a part of the one or more feature points on the basis of the given noise rank; and
a self-position estimation unit configured to estimate a position of the mobile object in the surrounding situation on the basis of the one or more feature points remaining after elimination.

2. The information processing device according to claim 1,
wherein the feature point elimination unit is configured to segment the image into a plurality of areas and give the noise rank on the basis of a density of the one or more feature points in each of the plurality of segmented areas.

3. The information processing device according to claim 2,
wherein the feature point elimination unit gives a higher noise rank as the density of the one or more feature points becomes higher.

4. The information processing device according to claim 1,
wherein the feature point elimination unit is configured to recognize an object reflected in the image and gives a noise rank according to a type of the object to the one or more feature points included in the recognized object.

5. The information processing device according to claim 4,
wherein the feature point elimination unit is configured to give a higher noise rank when the type of the object is a dynamic object than when the type of the object is a static object.

6. The information processing device according to claim 4,
wherein the feature point elimination unit is configured to given a high noise rank when the type of the object is a non-artificial object than when the type of the object is an artificial object.

7. An information processing method comprising:
by a computer,
acquiring an image obtained by imaging a surrounding situation of a mobile object;
extracting one or more feature points from the image using a predetermined method;
giving a noise rank representing a level of likelihood of noise to each of the one or more feature points and eliminate at least a part of the one or more feature points on the basis of the given noise rank; and
estimating a position of the mobile object in the surrounding situation on the basis of the one or more feature points remaining after elimination.

8. A program causing a computer to:
acquire an image obtained by imaging a surrounding situation of a mobile object;
extract one or more feature points from the image using a predetermined method;
give a noise rank representing a level of likelihood of noise to each of the one or more feature points and eliminate at least a part of the one or more feature points on the basis of the given noise rank; and
estimate a position of the mobile object in the surrounding situation on the basis of the one or more feature points remaining after elimination.
